# EUROPÄISCHE PATENTSCHRIFT

(11) **EP 0 806 747 B1**
(45) Veröffentlichungstag und Bekanntmachung des Hinweises auf die Patenterteilung: **07.06.2006**
(21) Anmeldenummer: 97105837.5
(22) Anmeldetag: 09.04.1997
(51) Int. Cl.: G07F 7/08

(54) **Verfahren und Anlage zum Transferieren von Geldbeträgen zwischen überschreibbaren Speichern einer Chipkarte**
Method and assembly for the transfer of sums of money between transferable memories of an IC-card
Méthode et installation pour transférer des sommes d'argent entre mémoires transférables d'une carte à puce

(30) Priorität: 08.05.1996 DE 19618471
(43) Veröffentlichungstag der Anmeldung: 12.11.1997
(73) Patentinhaber: Deutsche Telekom AG, 53113 Bonn (DE); International Business Machines Corporation, Armonk, N.Y. 10504 (US)
(72) Erfinder: Hartleif, Siegfried, 64823 Gross-Umstadt (DE); Niehaus, Herbert, 48165 Münster (DE)

(56) Entgegenhaltungen:
- EP-A- 0 058 029
- EP-A- 0 546 584
- EP-A- 0 605 070
- EP-A- 0 646 898
- WO-A-90/15382
- US-A- 4 839 504

## Beschreibung

Die Erfindung betrifft ein Verfahren nach Anspruch 1 zum Transferieren von Geldbeträgen zwischen wenigstens zwei überschreibbaren Speichern einer Chipkarte mit Hilfe eines Endgerätes, das mit einer zentralen Einrichtung, insbesondere einer Abrechnungszentrale verbunden werden kann.

Seit geraumer Zeit sind Chipkarten, die eine elektronische Geldbörse eines Börsen- oder Diensteanbieters enthalten, erhältlich, mit denen anstelle von Bargeld an dafür vorgesehenen Akzeptanzstellen bezahlt werden kann. Grundsätzlich sind zwei Methoden bekannt, die das Aufladen der elektronischen Geldbörse auf der Chipkarte ermöglichen. Nach der ersten Methode werden die zu ladenden Geldbeträge beispielsweise in bar, mit einer ec-Karte oder einer Kreditkarte vorab bezahlt und anschließend als Geldwerteeinheiten in die elektronische Geldbörse auf der Chipkarte geladen. Nach der anderen Methode wird die Chipkarte in einen Geldautomaten eingeführt und weist sich zunächst gegenüber einem Sicherheitsmodul oder einem Hintergrundsystem aus. Sogleich wird die auf ihr gespeicherte Bankverbindung des Kunden an das Sicherheitsmodul übertragen. Nach der Eingabe des gewünschten Geldbetrages an dem Geldautomaten und dem Laden der elektronischen Börse mit diesem Geldbetrag wird ein Buchungsdatensatz erzeugt, der zum einen das Konto des Karteninhabers mit diesem Geldbetrag belastet und zum anderen diesen Betrag auf dem Konto des Börsenbetreibers gutschreibt. Möchte jedoch ein Kartenherausgeber unterschiedlichen Börsen-Anbietern die Möglichkeit einräumen, die elektronische Geldbörse auf der Chipkarte gemeinsam zu nutzen, führt dies in der Praxis häufig zu Schwierigkeiten. Denn das Betreiben und die Verwaltung eines sogenannten offenen Börsensystems, bei dem mehrere Börsen-Anbieter eine einzige elektronische Geldbörse gemeinsam benutzen, ist ungleich aufwendiger und damit kostenträchtiger als dies bei geschlossenen Börsensystemen, bei denen jedem Börsen-Anbieter eine eigene elektronische Geldbörse auf der Chipkarte zugeordnet ist, der Fall ist. Ein weiterer Nachteil des offenen Börsensystems ist darin zu sehen, daß ein möglicher Mißbrauch der Karte in der Regel kaum zu erkennen ist. Die Schwierigkeiten eines offenen Börsensystems können dadurch vermieden werden, daß der Kartenherausgeber jedem Börsen-Anbieter eine eigene elektronische Geldbörse auf der Chipkarte zuweist, d.h. ein geschlossenes Börsensystem schafft. Dies führt allerdings für den Karteninhaber zu dem Nachteil, daß er auf jeder elektronischen Geldbörse Geld binden muß. Will ein Kunde zum Beispiel eine Geldbörse nutzen, auf der keine Geldwerteeinheiten mehr gespeichert sind, muß er nach einem der oben genannten Methoden erneut Geld investieren, auch wenn auf den übrigen elektronischen Geldbörsen noch ausreichende Guthaben vorhanden sind.

Aus der EP 0 605 070 A2 ist ein Verfahren zum Transferieren von Buchgeldbeträgen auf und von Chipkarten bekannt. Die Chipkarte weist mindestens zwei überschreibbare Speicherplätze auf, wobei die Speicherplätze in einen kreditorischen und mindestens einen debitorischen Speicherplatz aufgeteilt sind. In dem kreditorischen Speicherplatz ist ein Wert gespeichert, der den Kreditrahmen des Karteninhabers festlegt. Innerhalb dieses Kreditrahmens kann der Karteninhaber einen Geldbetrag in den debitorischen Speicherplatz laden. Nach jedem Transfervorgang wird das Konto des Dienstenutzers mit dem transferierten Betrag belastet. Gleichzeitig wird derselbe Betrag dem Diensteanbieter der debitorischen Börse gutgeschrieben.

Die EP 0 646 898 A2 offenbart ein System zur Durchführung von Transaktionen mit einer Multifunktionskarte mit elektronischer Börse. Die Multifunktionskarte enthält einen integrierten Schaltkreis, der eine der kontoführenden Bank des Benutzers zugeordnete Bankanwendung und wenigstens eine, einem Dienstleistungsanbieter oder Hersteller zugeordnete Börsenanwendung aufweist. Mit Hilfe einer mit der Karte kommunizierenden Vorrichtung kann der Kartenbenutzer einen wählbaren Geldbetrag in die Börsenanwendung laden. Der transferierte Geldbetrag wird dem Dienstleistungsanbieter gutgeschrieben und vom Konto des Benutzers abgezogen.

Der Erfindung liegt daher die Aufgabe zugrunde, ein Verfahren und eine Anlage zur Verfügung zu stellen, mit denen die Nachteile der bekannten offenen und geschlossenen Börsensysteme vermieden werden.

Das technische Problem löst die Erfindung mit den Verfahrensschritten des Anspruchs 1. Vorteilhafte Weiterbildungen sind in den Unteransprüchen genannt.

Die Erfindung beruht auf dem Gedanken, mehrere, auf einer Chipkarte implementierte elektronische Geldbörsen verschiedener Börsenbetreiber, die ein an sich geschlossenes Börsensystem bilden, koppeln zu können.
Dazu stellt die Erfindung ein Verfahren zum Transferieren von Geldbeträgen zwischen wenigstens zwei überschreibbaren Speichern einer Chipkarte mit Hilfe eines einen Kartenleser enthaltenen Endgeräts bereit, das mit einer zentralen Einrichtung verbunden werden kann, wobei der erste, einem ersten Börsenbetreiber zugeordnete Speicher anfänglich mit einem vorbestimmten Geldbetrag geladen ist. Zunächst wird die Chipkarte in den Kartenleser des Endgeräts eingeführt. Anschließend wird der vorbestimmte Geldbetrag aus dem ersten Speicher in den zweiten, einem zweiten Börsenbetreiber zugeordneten Speicher umgeladen. Nach der Umladeprozedur wird ein Buchungs-Datensatzes erzeugt, der zur weiteren Verrechnung an die zentrale Einrichtung übertragen wird. Bevor jedoch Geldbeträge zwischen den Speichern umgeladen werden, führt die Chipkarte mit einem dem Endgerät zugeordneten Sicherheitsmodul oder einem Hintergrundsystem eine gegenseitige, an sich bekannte Authentifizierung durch. Die Chipkarte kann derart programmiert sein, daß sie unter Ansprechen auf ein kryptographisch gesichertes Auslösesignal vom Sicherheitsmodul den am Endgerät eingegebenen Geldbetrag automatisch aus dem ersten Speicher in den zweiten Speicher umlädt. Alternativ fungiert die Chipkarte lediglich als Slave-Einrichtung, die unter Ansprechen auf kryptographisch gesicherte Steuerbefehle vom Sicherheitsmodul den am Endgerät eingegebenen Geldbetrag aus dem ersten Speicher ausliest und in den zweiten Speicher einschreibt. Die zentrale Einrichtung, bei der es sich in der Regel um eine Abbuchungszentrale handelt, sorgt unter Ansprechen auf den Buchungsdatensatz dafür, daß der umgeladene Geldbetrag auf dem Konto des zweiten Börsenbetreibers gutgeschrieben wird und das Konto des ersten Börsenbetreibers mit diesem Betrag belastet wird. Der Buchungsdatensatz kann ebenfalls kryptographisch gesichert werden. Der Börsenbetreiber des ersten Speichers, das ist der sogenannte Hauptbörsen-Betreiber, ist in der Lage, den kryptographisch gesicherten Buchungsdatensatz zu verifizieren. Unter einer kryptographischen Datensicherung versteht man allgemein die Verschlüsselung der zu übertragenden Nutzdaten selbst. Eine kryptographische Datensicherung liegt aber auch dann vor, wenn die Nutzdaten im Klartext übertragen werden, aber zusätzlich ein aus den Nutzdaten gewonnener Nachrichten-Authentifikationscode (MAC von message authentification code) angehängt wird.

Die Erfindung erlaubt einem Kunden auf einfache Art und Weise auf die elektronische Geldbörse eines anderen Börsenbetreibers zugreifen zu können, falls die von ihm benötigte elektronische Geldbörse eines anderen Börsenbetreibers, die auf derselben Chipkarte integriert ist, gerade leer ist.
Mit der Erfindung können die Vorteile eines geschlossenen Börsensystems, insbesondere die Unabhängigkeit der einzelnen Börsenbetreiber und der ihnen auf einer Chipkarte zugewiesenen elektronischen Geldbörsen, bewahrt werden.

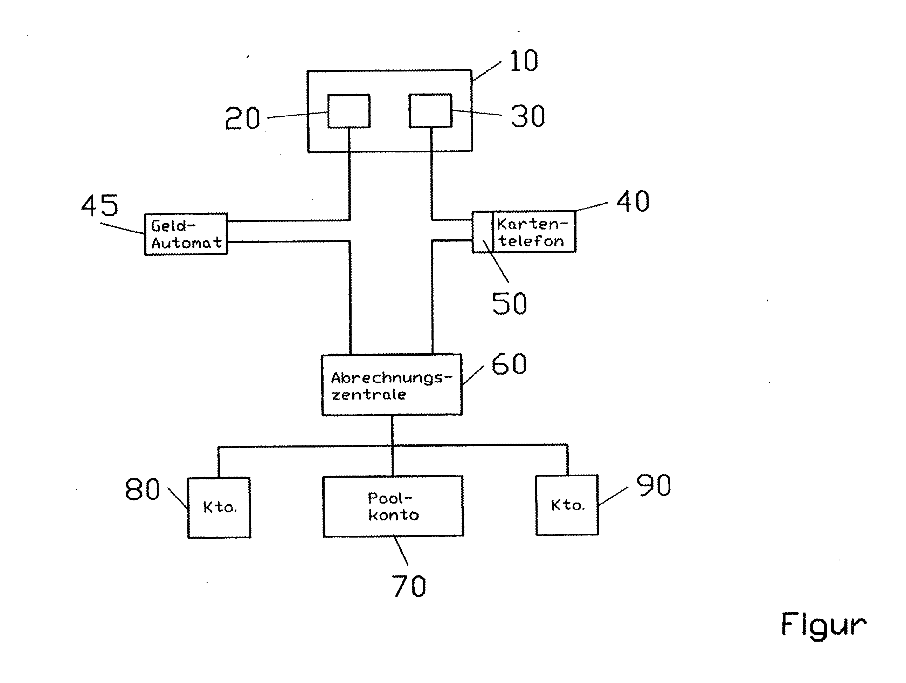

Die Erfindung wird nachstehend anhand eines Ausführungsbeispiels in Verbindung mit der beiliegenden Zeichnung näher erläutert.

Die Figur zeigt das prinzipielle Blockschaltbild einer Anlage, mit der das erfindungsgemäße Verfahren zum Transferieren von Geldbeträgen zwischen wenigstens zwei überschreibbaren Speichern einer Chipkarte durchgeführt werden kann. Eine im Verhältnis zu den übrigen Komponenten stark vergrößert dargestellte Chipkarte 10 enthält einen Speicher 20, der allgemein auch als elektronische Geldbörse bezeichnet wird. Der Speicher 20 sei die Hauptbörse, die einem ersten Börsenbetreiber zugeordnet ist. Bei dem ersten Börsenbetreiber handele es sich beispielsweise um ein Kaufhaus. Auf der Chipkarte 10 ist ein zweiter Speicher 30 implementiert, der als zweite elektronische Geldbörse fungiert und einem anderen Börsenbetreiber zugeordnet ist.

Für die weitere Beschreibung sei angenommen, daß es sich bei dem zweiten Börsenbetreiber um einen Telekommunikations-Netzbetreiber handelt, der unter anderem öffentliche Kartentelefone bereitstellt. Ein derartiges Kartentelefon ist in der Figur mit dem Bezugszeichen 40 versehen. Das Kartentelefon 40 verfügt selbstverständlich über einen Chipkartenleser, der nicht dargestellt ist. Ein Sicherheitsmodul 50, dessen Funktion nachfolgend noch ausführlicher beschrieben wird, ist beispielsweise in dem Kartentelefon 40 integriert; es kann aber auch extern diesem zugeordnet sein. Die Anlage umfaßt ferner an sich bekannte ec-Geldautomaten, an denen der Chipkarteninhaber seine Hauptbörse 20 laden kann. Der Einfachheit halber ist nur der mit 45 bezeichnete ec-Geldautomat dargestellt. Das Kaufhaus besitzt ein Summenkonto 70, auch Poolkonto genannt, über das die gesamten Geldtransaktionen des Karteninhabers mit dem Kaufhaus und dem Telekommunikations-Netzbetreiber abgewickelt werden. Der Karteninhaber verfügt über ein Konto 90, wohingegen der Telekommunikations-Netzbetreiber ein eigenes Konto 80 führt. Jedes Kartentelephon 40 und jeder ec-Geldautomat 45 sind mit einer Abbrechnungszentrale 60 verbunden. Die Abrechnungszentrale 60 ist derart ausgebildet, daß sie alle von dem Karteninhaber mit Bezug auf seine Chipkarte 10 gewünschten Geldbewegungen in dem Summenkonto 70, dem Kundenkonto 90 und dem Konto 80 des Telekommunikations-Netbzetreibers abwickeln kann.

Die Funktionsweise der Anlage und das erfindungsgemäße Verfahren werden nunmehr anhand des folgenden Szenarios erläutert. Zunächst sei angenommen, daß der Karteninhaber seine Hauptbörse 20 mit einem Geldbetrag von 50,- DM bereits geladen hat. Dies kann er an dem Geldautomaten 45 oder einem beliebigen elektronischen Cash-Terminal des Kaufhauses vornehmen Der Geldautomat 45 übermittelt nach der Transaktion des gewünschten Geldbetrages von 50,- DM einen Buchungsdatensatz an die Abrechnungszentrale 60. Die Abrechnungszentrale 60 veranlaßt unter Ansprechen auf den Buchungsdatensatz, daß das Konto 90 des Karteninhabers mit dem Betrag von 50,- DM belastet wird. Gleichzeitig sorgt die Abbuchungszentrale 60 dafür, daß der Geldbetrag auch auf dem Summenkonto 70 des Kaufhauses gutgeschrieben wird. Der Karteninhaber wünscht nunmehr an dem Kartentelefon 40 ein Gespräch zu führen. Überrascht stellt er fest, daß auf der elektronischen Geldbörse 30, die dem Telekommunikations-Netzbetreiber zugeordnet ist, kein Guthaben mehr gespeichert ist. Ohne erneut Geld von seinem Konto 90 abheben zu müssen, kann er dank der Erfindung einen gewünschten Geldbetrag, sagen wir einmal von 20,- DM, von dem Speicher 20 in den Speicher 30 umladen. Dazu führt der Karteninhaber seine Chipkarte 10 in den Kartenleser des Kartentelefons 40 ein. Das Kartentelefon 40 kann beispielsweise die aktuellen Guthaben der Geldbörsen 20 und 30 auf der Chipkarte 10 auslesen und dem Kunden an einem Display anzeigen. Da auf dem Speicher 30 kein Guthaben mehr gespeichert ist, veranlaßt der Kunde das Umladen des gewünschten Betrages von der Hauptbörse 20 des Kaufhauses auf die Börse 30 des Telekommunikations-Netzbetreibers. Um die Sicherheit beim Geldtransfer zu steigern, wird vor der eigentlichen Geld-Umladeprozedur eine gegenseitige Authentifikation zwischen der eingeführten Chipkarte 10 und dem dem Kartentelefon 40 zugeordneten Sicherheitsmodul 50 durchgeführt. Das Sicherheitsmodul 50 überzeugt sich davon, daß die eingeführte Chipkarte 10 echt ist. Ebenfalls überzeugt sich die Chipkarte 10 davon, daß das Endgerät 40 bzw. das Sicherheitsmodul 50 echt ist. Nach einer positiven Authentifizierung gibt der Karteninhaber den gewünschten Betrag von 20,- DM, der von dem Speicher 20 in den Speicher 30 umgeladen werden soll, an dem Kartentelephon 40 ein. Die Chipkarte 10 wird im Slave-Modus betrieben, d.h. die Umladeprozedur wird von außen, beispielsweise vom Sicherheitsmodul 50 gesteuert. Zunächst wird der Karteninhaber von dem Kartentelefon 40 aufgefordert, seine persönliche Geheimnummer einzugeben. Nach einer Prüfung der Geheimnummer auf Richtigkeit liest das Kartentelefon 40 das Verfallsdatum und die Kartennummer aus der Chipkarte 10 aus und überprüft, ob das Verfallsdatum abgelaufen ist und ob ggf. die Kartennummer in einer Sperrdatei steht. Die Prüfung hat ergeben, daß das Verfallsdatum weder abgelaufen ist noch daß die Kartennummer in einer Sperrdatei steht. Der Karteninhaber leitet an dem Kartentelefon 40 die Umladeprozedur mittels einer Tastenfolge ein, woraufhin das dem Kartentelefon 40 zugeordnete Sicherheitsmodul 50 zunächst einen kryptographisch abgesicherten "Verringerungsbefehl" an die Chipkarte 10 übermittelt. Unter Ansprechen auf den Verringerungsbefehl reduziert die Chipkarte 10 das Guthaben in der Hauptbörse 20, um den im Verringerungsbefehl genannten Geldbetrag von 20,- DM und überträgt eine kryptographisch gesicherte Anwort an das Sicherheitsmodul 50 zurück. Das Sicherheitsmodul 50 überträgt einen kryptographisch gesicherten "Umlade"-Befehl an die Chipkarte 10, die unter Ansprechen auf den Umladebefehl den aus dem Speicher 20 ausgelesenen Betrag von 20,- DM in den Speicher 30 einschreibt und wiederum eine kryptografisch gesicherte Antwort an das Sicherheitsmodul 50 zurückschickt. Nachdem die Umladeprozedur abgeschlossen ist, erzeugt das Sicherheitsmodul 50 einen kryptographisch gesicherten Buchungsdatensatz, der dem umgeladenen Guthaben entspricht. Der kryptographisch gesicherte Buchungsdatensatz wird im nächsten Schritt zu der Abrechnungszentrale 60 übermittelt. Die Abrechnungszentrale 60 veranlaßt nach Empfang des Buchungsdatensatzes, daß das Summenkonto 70 des Kaufhauses mit dem umgeladenen Betrag von 20,- DM belastet wird. Mit anderen Worten verfügt der Speicher 20 nach der Umladeprozedur nur noch über ein Guthaben von 30,- DM. Gleichzeitig sorgt die Abrechnungszentrale 60 dafür, daß der von dem Speicher 20 auf den Speicher 30 umgeladene Geldbetrag von 20,- DM auf dem Konto 80 des Telekommunikations-Netzbetreibers gutgeschrieben wird. Das erfindungsgemäße Verfahren sieht vor, daß der kryptographisch abgesicherte Buchungsdatensatz jederzeit von dem Kaufhaus überprüft werden kann.

Anstatt die Umladeprozedur eines vorbestimmten Geldbetrages von dem Hauptspeicher 20 in den Speicher 30 unter Steuerung des Sicherheitsmodul 50 durchführen zu lassen, kann die Chipkarte 10 derart programmiert sein, daß sie unter Ansprechen auf einen kryptographisch gesicherten Auslösebefehl vom Sicherheitsmodul 50 die Umladeprozedur selbständig ausführt.

## Patentansprüche

1. Verfahren zum Transferieren von Geldbeträgen zwischen wenigstens zwei überschreibbaren Speichern (20, 30) einer Chipkarte (10) eines Karteninhabers mit Hilfe eines einen Kartenleser enthaltenen Endgeräts (40), das mit einer zentralen Einrichtung (60) verbunden werden kann, wobei dem Karteninhaber ein Konto (90) zugeordnet ist, mit folgenden Verfahrensschritten:
a) Laden eines vorbestimmten Geldbetrags in den ersten, einem ersten Börsenbetreiber zugeordneten Speicher (20) an einer Geldausgabeeinrichtung (45), wobei der erste Börsenbetreiber ein Konto **(70)** hat, das mit der zentralen Einrichtung (60) verbunden ist,
b) Übermitteln eines Buchungsdatensatzes von der Geldausgabeeinrichtung (45) zur zentralen Einrichtung (60) ;
c) unter Ansprechen auf den Buchungsdatensatz veranlasst die zentrale Einrichtung (60), dass das Konto (90) des Karteninhabers mit dem vorbestimmten Geldbetrag belastet und der vorbestimmte Geldbetrag auf dem Konto (70) des ersten Börsenbetreibers **gutgeschrieben wird;**
d) Einführen der Chipkarte (10) in den Kartenleser des Endgeräts (40);
e) Umladen eines vorbestimmten Geldbetrages aus dem ersten Speicher (20) in den zweiten, einem zweiten Börsenbetreiber zugeordneten Speicher (30), wobei der zweite Börsenbetreiber ein Konto (80) hat, das mit der zentralen Einrichtung (60) verbunden ist;
fe) Erzeugen eines Buchungs datensatzes, der zur zentralen Einrichtung (60) übertragen wird, und
ge) nach dem Empfang des Buchungs datensatzes in der zentralen Einrichtung (60) wird das Konto (70) des ersten Börsenbetreibers mit dem umgeladenen Geldbetrag belastet und dieser Geldbetrag wird auf das Konto (80) des zweiten Börsenbetreibers gutgeschrieben.

2. Verfahren zum Transferieren von Geldbeträgen nach Anspruch 1, **gekennzeichnet durch** das gegenseitige Authentifizieren der eingeführten Chipkarte (10) mit einem dem Endgerät (40) zugeordneten Sicherheitsmodul (50).

3. Verfahren zum Transferieren von Geldbeträgen nach Anspruch 1 oder 2, **dadurch gekennzeichnet, daß** das Umladen des vorbestimmten Geldbetrags vom ersten (20) in den zweiten Speicher (30) durch einen kryptographisch gesicherten Befehl eingeleitet und anschließend automatisch in der Chipkarte (10) durchgeführt wird.

4. Verfahren zum Transferieren von Geldbeträgen nach Anspruch 1 oder 2, **dadurch gekennzeichnet, daß** die Chipkarte (10) unter Ansprechen auf kryptographisch gesicherte Befehle den vorbestimmten Geldbetrag aus dem ersten Speicher (20) ausliest und anschließend in den zweiten Speicher (30) einschreibt.

5. Verfahren zum Transferieren von Geldbeträgen nach einem der Ansprüche 1 bis 4, **dadurch gekennzeichnet, daß** der in Schritt fe) erzeugte Buchungs-Datensatz kryptographisch gesichert und zur zentralen Einrichtung (60) übertragen wird und daß die zentrale Einrichtung (60) mit Hilfe des empfangenen BuchungsDatensatzes veranlaßt, daß ein Summenkonto (70) des ersten Börsenbetreibers mit dem umgeladenen Geldbetrag belastet und der umgeladene Geldbetrag auf einem Konto (80) des zweiten Börsenbetreibers gutgeschrieben wird.

6. Verfahren zum Transferieren von Geldbeträgen nach Anspruch 5, **dadurch gekennzeichnet, daß** der kryptographisch gesicherte Buchungs-Datensatz vom ersten Börsenbetreiber verifiziert werden kann.

## Claims

1. Method for transferring sums of money between at least two rewritable memories (20, 30) of a chip card (10) of a card holder with the aid of a terminal device (40) containing a card reader and capable of being connected to a central facility (60), wherein an account (90) is associated with the card holder, having the following process steps:
a) loading, at a money dispensing device (45), of a predetermined sum of money into the first memory (20) associated with a first electronic purse operator, wherein the first electronic purse operator has an account (70) that is connected to the central facility (60);
b) transmission of a transaction data record from the money dispensing device (45) to the central facility (60);
c) in response to the transaction data record, the central facility (60) causes the account (90) of the card holder to be debited by the predetermined sum of money, and causes the predetermined sum of money to be credited to the account (70) of the first electronic purse operator;
d) introduction of the chip card (10) into the card reader of the terminal device (40);
e) transfer of a predetermined sum of money from the first memory (20) into the second memory (30), which is associated with a second electronic purse operator, said second electronic purse operator having an account (80) that is connected to the central facility (60);
f) generation of a transaction data record that is transmitted to the central facility (60), and
g) upon receipt of the transaction data record in the central facility (60), the account (70) of the first electronic purse operator is debited by the transferred sum of money, and this sum of money is credited to the account (80) of the second electronic purse operator.

2. Method for transferring sums of money according to claim 1, **characterized by** the mutual authentication of the inserted chip card (10) with a security module (50) associated with the terminal device (40).

3. Method for transferring sums of money according to any one of claims 1 or 2, **characterized in that** the transfer of the predetermined sum of money from the first memory (20) to the second memory (30) is initiated by means of a cryptographically secured command and is then automatically carried out in the chip card (10).

4. Method for transferring sums of money according to any one of claims 1 or 2, **characterized in that**, in response to cryptographically secured commands, the chip card (10) reads the predetermined sum of money from the first memory (20) and then writes it into the second memory (30).

5. Method for transferring sums of money according to any one of claims 1 through 4, **characterized in that** the transaction data record generated in step f is cryptographically secured and transmitted to the central facility (60), and **in that** the central facility (60) uses the received transaction data record to cause a summary account (70) of the first electronic purse operator to be debited by the transferred sum of money and to cause the transferred sum of money to be credited to an account (80) of the second electronic purse operator.

6. Method for transferring sums of money according to claim 5, **characterized in that** the cryptographically secured transaction data record can be verified by the first electronic purse operator.

## Revendications

1. Méthode pour transférer des sommes d'argent entre au moins deux mémoires réinscriptibles (20, 30) d'une carte à puce (10) d'un détenteur de carte à l'aide d'un terminal (40) comportant un lecteur de cartes (40) et apte à être relié à un dispositif central (60), un compte (90) étant affecté au détenteur de carte, comprenant les étapes suivantes:
a) chargement d'une somme d'argent prédéterminée dans la première mémoire (20), affectée à un premier opérateur de bourse, auprès d'un dispositif distributeur d'argent (45), le premier opérateur de bourse possédant un compte (70) relié au dispositif central (60),
b) transmission d'un bloc de données comptables du dispositif distributeur d'argent (45) au dispositif central (60) ;
c) en réponse au bloc de données comptables, le dispositif central (60) fait en sorte que la somme d'argent prédéterminée soit portée au débit du compte (90) du détenteur de compte et que la somme d'argent prédéterminée soit portée au crédit du compte (70) du premier opérateur de bourse;
d) insertion de la carte à puce (10) dans le lecteur de cartes du terminal (40) ;
e) transfert d'une somme d'argent prédéterminée de la première mémoire (20) vers la deuxième mémoire (30) affectée à un deuxième opérateur de bourse, le deuxième opérateur de bourse possédant un compte (80) relié au dispositif central (60) ;
f) génération d'un bloc de données comptables qui est transmis au dispositif central (60), et
g) après la réception du bloc de données comptables dans le dispositif central (60), la somme d'argent transférée est portée au débit du compte (70) du premier opérateur de bourse et ladite somme d'argent est portée au crédit du compte (80) du deuxième opérateur de bourse.

2. Méthode pour transférer des sommes d'argent selon la revendication 1, **caractérisé par** l'authentification mutuelle, moyennant un module de sécurité (50) affecté au terminal (40), de la carte à puce (10) insérée.

3. Méthode pour transférer des sommes d'argent selon la revendication 1 ou 2, **caractérisé en ce que** le transfert de la sommé d'argent prédéterminée de la première mémoire (20) vers la deuxième mémoire (30) est initié par une commande sécurisée par cryptographie et puis exécuté automatiquement dans la carte à puce (10).

4. Méthode pour transférer des sommes d'argent selon la revendication 1 ou 2, **caractérisé en ce que**, en réponse à des instructions sécurisées par cryptographie, la carte à puce (10) lit la somme d'argent prédéterminée depuis la première mémoire (20) pour l'écrire ensuite dans la deuxième mémoire (30).

5. Méthode pour transférer des sommes d'argent selon l'une des revendications 1 à 4, **caractérisé en ce que** le bloc de données comptables généré à l'étape f est sécurisé par cryptographie et transmis au dispositif central (60) et le dispositif central (60) fait en sorte, à l'aide du bloc de données comptables reçu, que la somme d'argent transféré soit portée au débit d'un compte sommaire (70) du premier opérateur de bourse et que la somme d'argent transféré soit portée au crédit d'un compte (80) du deuxième opérateur de bourse.

6. Méthode pour transférer des sommes d'argent selon la revendication 5, **caractérisé en ce que** le bloc de données comptables sécurisé par cryptographie peut être vérifié par le premier opérateur de bourse.
